# NEUE EUROPÄISCHE PATENTSCHRIFT

(11) **EP 0 386 636 B2**
(45) Veröffentlichungstag und Bekanntmachung des Hinweises auf die Entscheidung über den Einspruch: **10.12.1997**
(45) Hinweis auf die Patenterteilung: 11.11.1992
(21) Anmeldenummer: 90104025.3
(22) Anmeldetag: 01.03.1990
(51) Int. Cl.: C09K 7/06

(54) **Ester von Carbonsäuren mittlerer Kettenlänge als Bestandteil der Ölphase in Invert-Bohrspuelschlämmen**
Esters of medium chain size carboxylie acids as components of the oil phase of invert emulsion drilling fluids
Ester d'acides carboxyliques à chaîne moyenne, comme composants de la phase huile d'émulsion de forage inverses

(30) Priorität: 08.03.1989 DE 3907392
(43) Veröffentlichungstag der Anmeldung: 12.09.1990
(73) Patentinhaber: Henkel Kommanditgesellschaft auf Aktien, 40191 Düsseldorf (DE)
(72) Erfinder: Müller, Heinz, D-4019 Monheim (DE); Herold, Claus Peter, Dr., D-4020 Mettmann (DE); Von Tapavicza, Stephan, D-4006 Erkrath 2 (DE); Neuss, Michael, Dr., D-5000 Köln 50 (DE); Zöllner, Wolfgang, D-4000 Düsseldorf (DE); Burbach, Frank, D-4005 Meerbusch 1 (DE)

(56) Entgegenhaltungen:
- EP-A- 0 009 746
- DE-A- 2 302 918
- DE-A- 3 521 711
- US-A- 3 728 277
- Report Mssrs Herold, Müller, Dr. von Tapavicza of Henkel KGaA Laboratories :"Mineral oil free oil-based drilling fluids - Developments and outlook"

## Beschreibung

Die Erfindung beschreibt neue Bohrspülflüssigkeiten auf Basis von Esterölen und darauf aufgebaute Invert-Bohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind off-shore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat besondere Bedeutung im marinen Bereich, ist aber nicht darauf eingeschränkt. Die neuen Spülsysteme können ganz allgemeine Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich. Grundsätzlich gilt auch hier, daß durch die erfindungsgemäß ausgewählten Bohrölflüssigkeiten auf Esterbasis der ökotoxische Problembereich substantiell vereinfacht wird.

Bohrspülungen auf Ölbasis werden im allgemeinen als sogenannte Invert-Emulsionsschlämme eingesetzt, die aus einem Dreiphasensystem bestehen: Öl, Wasser und feinteilige Feststoffe. Es handelt sich dabei um Zubereitungen vom Typ der W/O-Emulsionen, d. h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorsysteme, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology - Mineral Oil Mud" Journal of Petroleum Technology, 1984, 975 bis 981 sowie die darin zitierte Literatur.

Die einschlägige Technologie hat seit einiger Zeit die Bedeutung von Ölphasen auf Esterbasis zur Minderung der durch solche Ölspülungen ausgelösten Problematik erkannt. So beschreiben die US-Patentschriften 4,374,737 und 4,481,121 ölbasierte Bohrspülflüssigkeiten, in denen nonpolluting oils Verwendung finden sollen. Als nonpolluting oils werden nebeneinander und gleichwertig aromatenfreie Mineralölfraktionen und Pflanzenöle von der Art Erdnußöl, Sojabohnenöl, Leinsamenöl, Maisöl, Reisöl oder auch Öle tierischen Ursprungs wie Walöl genannt. Durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen - auch wenn diese aromatenfrei sind - aus ökologischen Überlegungen deutliche Überlegenheit besitzen.

Interessanterweise schildert dann aber kein Beispiel der genannten US-Patentschriften die Verwendung solcher natürlicher Esteröle in Invert-Bohrspülungen der hier betroffenen Art. Durchweg werden Mineralölfraktionen als geschlossene Ölphase eingesetzt. Öle pflanzlichen und/oder tierischen Ursprungs kommen aus praktischen Gründen nicht in Betracht Die rheologischen Eigenschaften solcher Ölphasen sind für den breiten in der Praxis geforderten Temperaturbereich von 0 bis 5 °C einerseits sowie bis zu 250 °C und darüber andererseits nicht in den Griff zu bekommen.

Esteröle der hier betroffenen Art verhalten sich tatsächlich im Einsatz nicht gleich wie die bisher verwendeten Mineralölfraktionen auf reiner Kohlenwasserstoffbasis. Esteröle unterliegen im praktischen Einsatz auch und gerade in W/O-Invert-Bohrspülschlämmen einer partiellen Hydrolyse. Hierdurch werden freie Carbonsäuren gebildet. Die älteren Anmeldungen P 38 42 659.5 und P 38 42 703.6 (D 8523 "Verwendung ausgewählter Esteröle in Bohrspülungen (I)" sowie D 8524 "Verwendung ausgewählter Esteröle in Bohrspülungen (II)") beschreiben die dadurch ausgelösten Probleme und geben Vorschläge zu ihrer Lösung.

Gegenstand dieser älteren Anmeldungen ist die Verwendung von Esterölen auf Basis jeweils ausgewählter Monocarbonsäuren bzw. Monocarbonsäuregemische und monofunktioneller Alkohole mit wenigstens 2, bevorzugt mit wenigstens 4 C-Atomen. Die älteren Anmeldungen schildern, daß mit den dort offenbarten Estern bzw. Estergemischen monofunktioneller Reaktanten nicht nur in der frischen Bohrspülung befriedigende rheologische Eigenschaften eingestellt werden können, sondern daß es auch gelingt, unter Mitverwendung ausgewählter bekannterAlkalireserven in der Bohrspülung zu arbeiten und auf diese Weise unerwünschte Korrosion zurückzuhalten. Als Alkalireserve wird der Zusatz von Kalk (Calciumhydroxid bzw. lime) undloder die Mitverwendung von Zinkoxid oder vergleichbaren Zinkverbindungen vorgesehen. Dabei ist allerdings eine zusätzliche Einschränkung zweckmäßig. Soll im praktischen Betrieb die unerwünschte Eindickung des ölbasischen Invert-Spülsystems verhindert werden, so ist die Menge des alkalisierenden Zusatzstoffes und insbesondere die Kalkmenge zu begrenzen. Der vorgesehene Höchstbetrag ist nach der Offenbarung der genannten älteren Anmeldungen bei etwa 2 lb/bbl Ölspülung angesetzt.

Die im nachfolgenden geschilderte Lehre der Erfindung erweitert den Kreis der Esteröle, die in den hier betroffenen W/O-Spülschlämmen mit Vorteil eingesetzt werden können.

Gegenstand der Erfindung ist dementsprechend in einer ersten Ausführungsform die Verwendung von bei Raumtemperatur fließfähigen und Flammpunkte oberhalb 80°C aufweisenden Estern aus Monocarbonsäuren synthetischen und/oder natürlichen Ursprungs mit 6 bis 11 C-Atomen und 1- und/oder mehrfunktionellen Alkoholen als Ölphase oder Bestandteil der Ölphase von Invert-Bohrspülschlämmen, die für eine umweltschonende Erschließung von Erdöl- bzw. Erdgasvorkommen geeignet sind und in einer geschlossenen Ölphase eine disperse wässrige Phase zusammen mit Emulgatoren, Beschwerungsmitteln, fluid-loss-Additiven und gewünschtenfalls weiteren üblichen Zusatzstoffen enthalten, wobei als Ölphase Monocarbonsäureester der angegebenen Art oder deren Abmischungen mit ökologisch verträglichen Komponenten (nonpolluting oils) verwendet werden, die im Temperaturbereich von 0 bis 5°C eine Brookfield (RVT-)Viskosität nicht oberhalb 50 mPas aufweisen, und daß dabei die Verwendung von Methylestern der C₆₋₁₁-Monocarbonsäuren als Ölphase oder Bestandteil der Ölphase sowie die Verwendung solcher Ölphasen ausgeschlossen ist, die als ökologisch verträgliche Mischkomponenten Ester aus monofunktionellen Alkoholen mit 2 bis 12 C-Atomen und aliphatisch gesättigten Monocarbonsäuren mit 12 bis 16 C-Atomen als wenigstens hälftigen Anteil der Ölphase enthalten.

In einer weiteren Ausführungsform beschreibt die Erfindung Invert-Bohrspülungen der geschilderten Art, die dadurch gekennzeichnet sind, daß die Ölphase bei Raumtemperatur fließfähige und Flammpunkte oberhalb 80°C aufweisende Ester aus Monocarbonsäuren synthetischen und/oder natürlichen Ursprungs mit 6 bis 11 C-Atomen und 1- und/oder mehrfunktionellen Alkoholen, gewünschtenfalls in Abmischung mit anderen Komponenten aus der Klasse der ökologisch verträglichen Verbindungen (nonpolluting oils) mit der Maßgabe enthält, daß die Ölphase des Invertschlamms im Temperaturbereich von 0 bis 5°C eine Brookfield (RVT)-Viskosität unterhalb 50 mPas aufweist und daß dabei die Verwendung von Methylestern der C₆₋₁₁-Monocarbonsäuren als Ölphase oder Bestandteil der Ölphase sowie die Verwendung solcher Ölphasen ausgeschlossen ist, die als ökologisch verträgliche Mischkomponenten Ester aus monofunktionellen Alkoholen mit 2 bis 12 C-Atomen und aliphatisch gesättigten Monocarbonsäuren mit 12 bis 16 C-Atomen als wenigstens hälftigen Anteil der Ölphase enthalten.

Bevorzugt kommen in den so definierten Esterölen Alkoholkomponenten zum Einsatz, die auch nach einer partiellen Esterspaltung im praktischen Einsatz ökologisch und toxikologisch unbedenklich sind, insbesondere berücksichtigt die Erfindung in diesem Aspekt den inhalations-toxikologischen Problemkreis der beim Umgang mit der Ölspülung im praktischen Einsatz bedeutungsvoll werden kann.

Im nachfolgenden werden zunächst die erfindungsgemäß eingesetzten Esteröle näher beschrieben, nachfolgende Unterkapitel beschäftigen sich mit möglichen Mischungskomponenten und weiteren Einzelheiten zur Erfindung.

### Die erfindungsgemäß eingesetzten Esteröle

Basis für die erfindungsgemäß beschriebenen Esteröle sind auf der Carbonsäureseite synthetische und/ oder natürliche Monocarbonsäuren mit 6 bis 11 C-Atomen, die geradkettig und/oder verzweigt sein können. Geradkettige und in der Regel geradzahlige Carbonsäuren dieses Bereichs leiten sich insbesondere aus Ölen bzw. Fetten natürlichen Ursprungs ab und bilden dort bekanntlich die sogenannten Vorlauffettsäuren des Bereichs C₆₋₁₀. Auch synthetische Carbonsäuren dieser Art sind beispielsweise durch Oxidation von Ziegler-Alkoholen leicht zugänglich. Verzweigte bzw. Mischungen von verzweigten und geradkettigen Carbonsäuren des hier betroffenen Bereichs stehen aus zahlreichen Prozessen der Petrochemie zur Verfügung.

Bevorzugte Ester dieser Carbonsäuren mittlerer Kettenlänge mit 1- und/oder mehrfunktionellen Alkoholen sind für den erfindungsgemäßen Einsatzzweck auch im Temperaturbereich von 0 bis 5°C fließ- und pumpfähig. Als Ölphase werden dabei insbesondere Monocarbonsäureester der angegebenen Art oder deren Abmischungen mit ökologisch verträglichen Komponenten - den sogenannten nonpolluting oils - verwendet, die im Temperaturbereich von 0 bis 5 °C eine Brockfield(RVT)-Viskosität nicht oberhalb 40 mPas besitzen. Geeignet sind insbesondere Ester bzw. Estergemische der angegebenen Art, deren Viskositätswert bei höchstens etwa 30 mPas liegt.

Die im Bohrschlamm bevorzugt eingesetzten Ester der genannten Art zeigen weiterhin Erstarrungswerte (Fließ- und Stockpunkt) unterhalb 0 °C, wobei entsprechende Grenzwerte unterhalb - 5 °C und insbesondere unterhalb - 10 °C besonders geeignet sind. Insbesondere aus Gründen der Betriebssicherheit sind weiterhin möglichst hohe Flammpunkte wünschenswert, so daß entsprechende Werte von wenigstens 90 °C und vorzugsweise oberhalb 100 °C besonders zweckmäßig sind. Durch geeignete Wahl der Esterbildenden Komponenten läßt sich für den Fachmann in an sich bekannter Weise die gewünschte Kombination von Stoffeigenschaften für die hier betroffenen Esteröle jeweils verwirklichen.

Die erfindungsgemäß zum Einsatz kommenden Carbonsäureester mittlerer Kettenlänge in der Carbonsäureeinheit lassen sich in zwei Unterklassen aufteilen: in Ester dieser Säuren mit monofunktionellen Alkoholen und in Ester dieser Säuren mit mehrfunktionellen Alkoholen. Zur Auswahl besonders geeigneter Komponenten gelten die nachfolgenden Angaben.

Ester der angegebenen Art auf Basis von monofunktionellen Alkoholen enthalten vorzugsweise wenigstens 6 und besser noch wenigstens 7 C-Atome in der Alkoholkomponente. Durch diesen vergleichsweise hohen unteren Grenzwert für die Alkoholkomponente kann sichergestellt werden, daß im praktischen Einsatz auch nach einer partiellen Esterspaltung toxikologische und insbesondere inhalations-toxikologische Probleme mit einfachen Mitteln zu bewältigen sind. Im praktischen Einsatz ist ja davon auszugehen, daß die wenigstens leicht angewärmte Spülung umgepumpt und insbesondere durch Sieben von aufgenommenem Bohrklein befreit wird. Bei fortschreitender Alterung und der damit ausgelösten partiellen Hydrolyse entstehen Probleme nicht nur aus der Bildung freier Fettsäuren bzw. ihrer Salze wie sie in den genannten älteren Anmeldungen D 8523 und D 8524 beschrieben sind, auch die frei werdende Alkoholkomponente kann Schwierigkeiten für den praktischen Betrieb bedeuten. Dieser Alkoholgehalt wird immer dann zu berücksichtigen sein, wenn aufgrund seiner Flüchtigkeit und den vorgegebenen Arbeitstemperaturen mit einer Belästigung durch Alkoholdämpfe zu rechnen ist. Niedere monofunktionelle Alkohole können hier zusätzliche Probleme schaffen, die zwar - beispielsweise auf konstruktivem Wege - zu bewältigen sind, in der bevorzugten Ausführungsform der Erfindung aber von vorneherein ausgeschaltet werden. Liegen in den erfindungsgemäß verwendeten Esterölen monofunktionelle Alkohole natürlichen und/oder synthetischen Ursprungs vor, die überwiegend aliphatisch gesättigt sind, so werden bevorzugt solche Alkohole des Bereichs von C₈₋₁₆ zur Esterbildung eingesetzt. Ihr Dampfdruck ist unter den in der Praxis auftretenden Arbeitsbedingungen so gering, daß der hier zuletzt angesprochene Problemkreis ausgeschaltet ist.

Ester monofunktioneller Alkohole sind allerdings nicht auf diesen C-Zahlbereich eingeschränkt. Es können auch höhere monofunktionelle Alkohole in Betracht kommen, deren Ester mit den erfindungsgemäß definierten Carbonsäuren mittlerer Kettenlänge rheologisch brauchbare Öle bzw. Ölkomponenten liefern. In Betracht kommen hier insbesondere 1- undloder mehrfach olefinisch ungesättigte Alkohole, die beispielsweise bis zu 24 C-Atome oder auch noch höhere C-Zahlen aufweisen können. Alkohole dieser Art sind insbesondere durch selektive Reduktion entsprechender natürlicher Fettsäuren zugänglich, auf die im Rahmen weiterer Aspekte der Erfindungsbeschreibung noch eingegangen wird.

Inhalations-toxikologische Probleme sind bei dem Einsatz von Estern mehrfunktioneller Alkohole in der Regel von vorneherein unbedeutend. Als mehrfunktionelle Alkohole eignen sich insbesondere 2- bis 4wertige Alkohole und hier insbesondere die entsprechenden niederen Vertreter dieser Stoffklasse mit vorzugsweise 2 bis 6 C-Atomen. Besonders geeignete mehrfunktionelle Alkohole sind das Glycol undloder die Propandiole. Ethylenglycol, 1,2-Propandiol undloder 1,3-Propandiol sind dementsprechend besonders bevorzugte Alkoholkomponenten für die Ausbildung der erfindungsgemäß beschriebenen Esteröle. Dabei kommen sowohl Partialester wie Vollester der hier betroffenen Art in Betracht, wobei insbesondere aus rheologischen Gründen den vollveresterten Produkten besondere Bedeutung zukommen kann. Es kann sich dabei um symmetrische und/oder unsymmetrische Ester bzw. Estergemische handeln, sofern wenigstens anteilsweise Carbonsäuren des angegebenen C-Zahlbereichs mitverwendet sind.

Die Ölphase der W/O-Emulsionen kann ausschließlich aus Estern der hier geschilderten Art gebildet sein, zusammen mit diesen erfindungsgemäß definierten Esterölen können aber auch die im nachfolgenden angegebenen Mischungskomponenten zum Einsatz kommen.

### Mischungskomponenten in der Ölphase

Zur Abmischung mit den Monocarbonsäureestern der Erfindung geeignete Ölkomponenten sind die in der heutigen Praxis der Bohrspülungen eingesetzten Mineralöle und dabei bevorzugt im wesentlichen aromatenfreie aliphatische und/oder cycloaliphatische Kohlenwasserstofffraktionen der geforderten Fließeigenschaften. Auf den einschlägigen druckschriftlichen Stand der Technik und die auf dem Markt befindlichen Handelsprodukte wird verwiesen.

Besonders wichtige Mischungskomponenten sind allerdings im Sinne des erfindungsgemäßen Handelns umweltverträgliche Esteröle wie sie insbesondere in den genannten älteren Anmeldungen ... (D 8523 und D 8524) geschildert sind. Zur Vervollständigung der Erfindungsoffenbarung werden im nachfolgenden wesentliche Kenndaten solcher Ester bzw. Estergemische kurz zusammengefaßt.

In einer ersten Ausführungsform werden im Temperaturbereich von 0 bis 5 °C fließ- und pumpfähige Ester aus monofunktionellen Alkoholen mit 2 bis 12, insbesondere mit 6 bis 12 C-Atomen und aliphatisch gesättigten Monocarbonsäuren mit 12 bis 16 C-Atomen oder deren Abmischung mit höchstens etwa gleichen Mengen anderer Monocarbonsäuren als Ölphase verwendet. Bevorzugt sind dabei Esteröle, die zu wenigstens etwa 60 Gew.-% - bezogen auf das jeweilige Carbonsäuregemisch - Ester aliphatischer C₁₂₋₁₄-Monocarbonsäuren sind und gewünschtenfalls zum Rest auf untergeordnete Mengen kürzerkettiger aliphatischer und/oder längerkettiger, dann insbesondere 1- undloder mehrfach olefinisch ungesättigter Monocarbonsäuren zurückgehen. Bevorzugt werden Ester eingesetzt, die im Temperaturbereich von 0 bis 5 °C eine Brookfield(RVT)-Viskosität im Bereich nicht oberhalb 50 mPas, vorzugsweise nicht oberhalb 40 mPas und insbesondere von höchstens etwa 30 mPas besitzen. Die im Bohrschlamm eingesetzten Ester zeigen Erstarrungswerte (Fließ- und Stockpunkt) unterhalb - 10 °C, vorzugsweise unterhalb - 15 °C und besitzen dabei insbesondere Flammpunkte oberhalb 100 °C, vorzugsweise oberhalb 150 °C. Die im Ester bzw. Estergemisch vorliegenden Carbonsäuren sind geradkettig undloder verzweigt und dabei pflanzlichen undloder synthetischen Ursprungs. Sie können sich von entsprechenden Triglyceriden wie Kokosöl, Palmkernöl undloder Babassuöl ableiten. Die Alkoholreste der eingesetzten Ester leiten sich insbesondere von geradkettigen und/oder verzweigten gesättigten Alkoholen mit vorzugsweise 6 bis 10 C-Atomen ab. Auch diese Alkoholkomponenten können pflanzlichen undloder tierischen Ursprungs und dabei durch reduktive Hydrierung entsprechender Carbonsäureester gewonnen worden sein.

Eine weitere Klasse besonders geeigneter Esteröle leitet sich von olefinisch 1- und/oder mehrfach ungesättigten Monocarbonsäuren mit 16 bis 24 C-Atomen oder deren Abmischungen mit untergeordneten Mengen anderer, insbesondere gesättigter Monocarbonsäuren und monofunktionellen Alkoholen mit bevorzugt 6 bis 12 C-Atomen ab. Auch diese Esteröle sind im Temperaturbereich von 0 bis 5 °C fließ- und pumpfähig. Geeignet sind insbesondere Ester dieser Art, die sich zu mehr als 70 Gew.-%, vorzugsweise zu mehr 80 Gew.-% und insbesondere zu mehr als 90 Gew.-% von olefinisch ungesättigten Carbonsäuren des Bereichs von C₁₆₋₂₄ ableiten.

Auch hier liegen die Erstarrungswerte (Fließ- und Stockpunkt) unterhalb - 10 °C, vorzugsweise unterhalb - 15 °C, während die Flammpunkte oberhalb 100 °C und vorzugsweise oberhalb 160 °C liegen. Die im Bohrschlamm eingesetzten Ester zeigen im Temperaturbereich von 0 bis 5 °C eine Brookfield(RVT)-Viskosität von nicht mehr als 55 mPas, vorzugsweise von nicht mehr als 45 mPas.

Bei Esterölen der hier betroffenen Art lassen sich zwei Unterklassen definieren. In der ersten leiten sich die im Ester vorliegenden ungesättigten C₁₆₋₂₄-Monocarbonsäurereste zu nicht mehr als 35 Gew.-% von 2- und mehrfach olefinisch ungesättigten Säuren ab, wobei bevorzugt wenigstens etwa 60 Gew.-% der Säurereste einfach olefinisch ungesättigt sind. In der zweiten Ausführungsform leiten sich die im Estergemisch vorliegenden C₁₆₋₂₄-Monocarbonsäuren zu mehr als 45 Gew.-%, vorzugsweise zu mehr als 55 Gew.-% von 2- und/oder mehrfach olefinisch ungesättigten Säuren ab. Im Estergemisch vorliegende gesättigte Carbonsäuren des Bereiches C_{16/18} machen zweckmäßigerweise nicht mehr als etwa 20 Gew.-% und insbesondere nicht mehr als etwa 10 Gew.-% aus. Bevorzugt liegen gesättigte Carbonsäureester aber im Bereich niedrigerer C-Zahlen der Säurereste. Die vorliegenden Carbonsäurereste können pflanzlichen und/oder tierischen Ursprungs sein. Pflanzliche Ausgangsmaterialien sind beispielsweise Palmöl, Erdnußöl, Rizinusöl und insbesondere Rüböl. Carbonsäuren tierischen Ursprungs sind insbesondere entsprechende Gemische aus Fischölen wie Heringsöl.

Eine weitere interessante Klasse von Esterölen, die als Mischungskomponente im Rahmen des erfindungsgemäßen Handelns mitverwendetwerden kann, ist in der parallelen Anmeldung ... (D 8606 "Verwendung ausgewählter Esteröle niederer Carbonsäuren in Bohrspülungen") beschrieben. Hierbei handelt es sich um bei Raumtemperatur fließfähige und Flammpunkte oberhalb 80 °C aufweisende Ester aus C₁₋₅-Monocarbonsäuren und ein- undloder mehrfunktionellen Alkoholen, die bevorzugt auch im Temperaturbereich von 0 bis 5 °C fließ- und pumpfähig sind. Geeignet sind dabei insbesondere entsprechende Ester dieser niederen Carbonsäuren mit monofunktionellen Alkoholen mit wenigstens 8 C-Atomen undloder Ester dieser Säuren mit 2- bis 4wertigen Alkoholen mit vorzugsweise 2 bis 6 C-Atomen. Als Ester-bildende Säurekomponente dieser Klasse eignet sich aus praktischen Gründen insbesondere die Essigsäure. Maßzahlen zur Rheologie und Flüchtigkeit bzw. den Erstarrungswerten bevorzugter Ester dieser Unterklasse entsprechen den zuvor genannten Werten und finden sich im einzelnen in der genannten parallelen Patentanmeldung, auf die zum Zwecke der Erfindungsoffenbarung hier ausdrücklich Bezug genommen wird.

Geeignet sind als Mischungskomponenten aus dieser Unterklasse insbesondere Ester von monofunktionellen Alkoholen natürlichen undloder synthetischen Ursprungs, deren Kettenlänge beim Vorliegen überwiegend aliphatisch gesättigter Alkohole im Bereich von C₈₋₁₅, im Falle 1- und mehrfach olefinisch ungesättigter Alkohole, aber auch bei höheren C-Zahlen, beispielsweise bis etwa C₂₄ liegen kann.

In den Rahmen der Erfindung fallen Mehrstoffgemische, die zusammen mit den erfindungsgemäß definierten Esterölen auf Basis von Carbonsäuren mittlerer Kettenlänge eine oder mehrere der hier im einzelnen aufgezählten Mischungskomponenten enthalten können. Dabei sind grundsätzlich beliebige Abmischungen verwendbar, soweit sie die rheologischen Grundforderungen für Invert-Bohrspülungen der hier betroffenen Art erfüllen. Als Beispiele für solche Mehrkomponentengemische seien Materialien auf Basis verschiedener Typen an Esterölen oder aber auch zusätzlich Mineralöl enthaltende Stoffmischungen genannt

### Die Mischungsverhältnisse in der Ölphase

Die erfindungsgemäß definierten Ester aus Monocarbonsäuren synthetischen und/oder natürlichen Ursprungs mit 6 bis 11 C-Atomen und 1- und/oder mehrfunktionellen Alkoholen liegen als wenigstens substantieller Bestandteil in der Ölphase vor, wobei im allgemeinen ihr Anteil wenigstens etwa 20 bis 25 Gew.-% der Ölphase ausmacht. In wichtigen Ausführungsformen wird wenigstens etwa ein Drittel der Ölphase durch Esteröle dieser Art gebildet, besonders wichtige Ausführungsformen der Erfindung sind dadurch gekennzeichnet, daß Ester der hier beschriebenen Art den überwiegenden Anteil der geschlossenen Ölphase bilden.

Schon in der eingangs genannten älteren Anmeldung P 38 42 703.6 (D 8524) wird darauf verwiesen, daß insbesondere beim Einsatz von gesättigten Fettsäuren natürlichen Ursprungs beschränkte Mengen an Estern der sogenannten Vorlauffettsäuren - d. h. des Bereichs von C₆₋₁₀-mitverwendet werden können. Dabei handelt es sich allerdings in aller Regel um vergleichsweise kleine Mengen, die je nach dem Ursprung dieser gesättigten Fettsäuregemische höchstens etwa 15 Gew.-% ausmachen. Die Lehre der vorliegenden Erfindung führt also auch insoweit über die Angaben der genannten älteren Anmeldung hinaus.

### Weitere Mischungskomponenten der Invert-Bohrspülung

In Betracht kommen hier alle üblichen Mischungsbestandteile zur Konditionierung und für den praktischen Einsatz der Invert-Bohrspülschlämme, wie sie nach der heutigen Praxis mit Mineralölen als geschlossene Ölphase zur Verwendung kommen. Neben der dispersen wäßrigen Phase kommen hier insbesondere Emulgatoren, Beschwerungsmittel, fluid-loss-Additive, Viskositätsbildner und Alkalireserven in Betracht.

In einer besonders wichtigen Ausführungsform der Erfindung wird auch hier Gebrauch gemacht von der Weiterentwicklung solcher Invert-Bohrspülungen auf Esterölbasis, die Gegenstand der älteren Anmeldung ... (D 8543 "Olephile basische Aminverbindungen als Additiv in Invert-Bohrspülschlämmen") der Anmelderin ist

Die Lehre dieser älteren Anmeldung geht von dem Konzept aus, in Invert-Bohrspülungen auf Basis von Esterölen ein zusätzliches Additiv mitzuverwenden, das geeignet ist, die erwünschten rheologischen Daten der Bohrspülung im geforderten Bereich auch dann zu halten, wenn im Gebrauch zunehmend größere Mengen an freien Carbonsäuren durch partielle Esterhydrolyse gebildet werden. Diese freiwerdenden Carbonsäuren sollen nicht nur in einer unschädlichen Form abgefangen werden, es soll darüber hinaus möglich sein, diese freien Carbonsäuren gewünschtenfalls zu wertvollen Komponenten mit stabilisierenden bzw. emulgierenden Eigenschaften für das Gesamtsystem umzuwandeln. Vorgesehen ist nach dieser Lehre die Mitverwendung von basischen und zur Salzbildung mit Carbonsäuren befähigten Aminverbindungen ausgeprägt oleophiler Natur und höchstens beschränkter Wasserlöslichkeit als Additiv in der Ölphase. Die oleophilen Aminverbindungen können gleichzeitig wenigstens anteilsweise als Alkalireserve der Invert-Bohrspülung Verwendung finden, sie können aber auch in Kombination mit konventionellen Alkalireserven, insbesondere zusammen mit Kalk eingesetzt werden. Bevorzugt ist die Verwendung von oleophilen Aminverbindungen, die wenigstens überwiegend frei sind von aromatischen Bestandteilen. In Betracht kommen insbesondere gegebenenfalls olefinisch ungesättigte aliphatische, cydoaliphatische und/oder heterocyclische oleophile basische Aminverbindungen, die eine oder auch mehrere mit Carbonsäuren zur Salzbildung befähigte N-Gruppierungen enthalten. Die Wasserlöslichkeit bei Raumtemperatur dieser Aminverbindungen beträgt in einer bevorzugten Ausführungsform höchstens etwa 5 Gew.-% und liegt zweckmäßigerweise unter 1 Gew.-%.

Typische Beispiele für solche Aminverbindungen sind wenigstens weitgehend wasserunlösliche primäre, sekundäre und/oder tertiäre Amine, die auch beschränkt alkoxyliert undloder mit insbesondere Hydroxylgruppen substituiert sein können. Weitere Beispiele sind entsprechende Aminoamide undloder Stickstoff als Ringbestandteil enthaltende Heterocyclen. Geeignet sind beispielsweise basische Aminverbindungen, die wenigstens einen langkettigen Kohlenwasserstoffrest mit bevorzugt 8 bis 36 C-Atomen, insbesondere mit 10 bis 24 C-Atomen aufweisen, der auch 1- oder mehrfach olefinisch ungesättigt sein kann. Die oleophilen basischen Aminverbindungen können der Bohrspülung in Mengen bis zu etwa 10 lb/bbl, vorzugsweise in Mengen bis zu etwa 5 lb/bbl und insbesondere im Bereich von etwa 0,1 bis 2 lb/bbl zugesetzt werden.

Es hat sich gezeigt, daß die Mitverwendung solcher oleophiler basischer Aminverbindungen Verdickungen des Spülsystems wirkungsvoll verhindern kann, die vermutlich auf eine Störung des W/O-Invertsystems zurückzuführen und auf die Entstehung freier Carbonsäuren durch Esterhydrolyse zurückzuführen sind.

In einer bevorzugten Ausführungsform des erfindungsgemäßen Handelns wird darauf geachtet, in der Ölspülung keine wesentlichen Mengen stark hydrophiler Basen anorganischer und/oder organischer Art mitzuverwenden. Insbesondere verzichtet die Erfindung auf die Mitverwendung von Alkalihydroxiden oder stark hydrophilen Aminen von der Art des Diethanolamins und/oder des Triethanolamins. Kalk kann wirkungsvoll als Alkalireserve mitverwendet werden. Es ist dann allerdings zweckmäßig, die maximal einzusetzende Kalkmenge mit etwa 2 lb/bbl zu beschränken, wobei es bevorzugt sein kann, mit Bohrschlammbeladungen an Kalk zu arbeiten, die leicht darunter liegen, beispielsweise also im Bereich von etwa 1 bis 1,8 lb/bbl (Kalk/Bohrspülung) liegen. Neben oder anstelle des Kalks können andere Alkalireserven bekannter Art zum Einsatz kommen. Genannt seien hier insbesondere die weniger basischen Metalloxide von der Art des Zinkoxids. Auch bei dem Einsatz solcher Säurefänger wird allerdings darauf geachtet werden, keine zu großen Mengen einzusetzen, um eine unerwünschte vorzeitige Alterung der Bohrspülung - verbunden mit einem Viskositätsanstieg und damit Verschlechterung der rheologischen Eigenschaften - zu verhindern. Durch die hier diskutierte Besonderheit des erfindungsgemäßen Handelns wird das Entstehen unerwünschter Mengen an hoch wirksamen O/W-Emulgatoren verhindert oder wenigstens so eingeschränkt, daß die guten rheologischen Einsatzwerte auch bei der thermischen Alterung im Betrieb für hinreichend lange Zeit aufrechterhalten bleiben.

Weiterhin gilt das folgende:
Invert-Bohrspülschlämme der hier betroffenen Art enthalten üblicherweise zusammen mit der geschlossenen Ölphase die feindisperse wäßrige Phase in Mengen von etwa 5 bis 45 Gew.-% und vorzugsweise in Mengen von etwa 5 bis 25 Gew.-%. Dem Bereich von etwa 10 bis 25 Gew.-% an disperser wäßriger Phase kann besondere Bedeutung zukommen.

Für die Rheologie bevorzugter Invert-Bohrspülungen im Sinne der Erfindung gelten die folgenden rheologischen Daten: Plastische Viskosität (PV) im Bereich von etwa 10 bis 60 mPas, bevorzugt von etwa 15 bis 40 mpas, Fließgrenze (Yield Point YP) im Bereich von etwa 5 bis 40 lb/100 ft², bevorzugt von etwa 10 bis 25 lb/100 ft² - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachwelt frei zugänglich ist. Zusammenfassend kann hier zum Zwecke der Vervollständigung der Erfindungsoffenbarung das folgende gesagt werden:

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Beispiele hierfür werden in der bereits zitierten US-PS 4,374,737 und der dort zitierten Literatur beschrieben. Ein besonders geeigneter Emulgatortyp ist das von der Firma NL Baroid unter dem Handelsnamen "EZ-mul" vertriebene Produkt.

Emulatoren der hier betroffenen Art werden im Handel als hochkonzentrierte Wirkstoffaufbereitungen vertrieben und können beispielsweise in Mengen von etwa 2,5 bis 5 Gew.-%, insbesondere in Mengen von etwa 3 bis 4 Gew.-% - jeweils bezogen auf Esterölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von etwa 15 bis 20 lb/bbl oder im Bereich von etwa 5 bis 7 Gew.-% - bezogen auf die Esterölphase.

In Bohrspülungen der hier betroffenen Art ist der üblicherweise eingesetzte Viskositätsbildner ein kationisch modifizierter feinteiliger Bentonit, der insbesondere in Mengen von etwa 8 bis 10 lb/bbl oder im Bereich von etwa 2 bis 4 Gew.-%, bezogen auf Esterölphase, verwendet werden kann. Das in der einschlägigen Praxis üblicherweise eingesetzte Beschwerungsmittel zur Einstellung des erforderlichen Druckausgleiches ist Baryt, dessen Zusatzmengen den jeweils zu erwartenden Bedingungen der Bohrung angepaßt wird. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen.

Die disperse wäßrige Phase wird in Invert-Bohrspülungen der hier betroffenen Art mit löslichen Salzen beladen. Überwiegend kommt hier Calciumchlorid undloder Kaliumchlorid zum Einsatz, wobei die Sättigung der wäßrigen Phase bei Raumtemperatur mit dem löslichen Salz bevorzugt ist.

Die zuvor erwähnten Emulgatoren bzw. Emulgatorsysteme dienen gegebenenfalls auch dazu, die Ölbenetzbarkeit der anorganischen Beschwerungsmaterialien zu verbessern. Neben den bereits genannten Aminoamiden sind als weitere Beispiele Alkylbenzolsulfonate sowie Imidazolinverbindungen zu nenen. Zusätzliche Angaben zum einschlägigen Stand der Technik finden sich in den folgenden Literaturstellen: GB 2 158 437, EP 229 912 und DE 32 47 123.

Die erfindungsgemäß auf der Mitverwendung von Esterölen der geschilderten Art aufgebauten Bohrspülflüssigkeiten zeichnen sich zusätzlich zu den bereits geschilderten Vorteilen auch durch eine deutlich verbesserte Schmierfähigkeit aus. Wichtig ist das insbesondere dann, wenn bei Bohrungen beispielsweise in größeren Tiefen der Gang des Bohrgestänges und damit auch das Bohrloch Abweichungen von der Senkrechten aufweisen. Das rotierende Bohrgestänge kommt hier leicht mit der Bohrlochwand in Kontakt und gräbt sich im Betrieb in diese ein. Esteröle der erfindungsgemäß als Ölphase eingesetzten Art besitzen eine deutlich bessere Schmierwirkung als die bisher verwendeten Mineralöle. Hier liegt ein weiterer wichtiger Vorteil für das erfindungsgemäße Handeln.

### Beispiele

In den nachfolgenden Beispielen werden Invert-Bohrspülungen in konventioneller Weise unter Benutzung der folgenden Rahmenrezeptur hergestellt:

| | |
|---|---|
| 230 ml | Esteröl |
| 26 ml | Wasser |
| 6 g | organophiler Bentonit (Geltone II der Fa. NL Baroid) |
| 12 g | organophiler Lignit (Duratone der Fa. NL Baroid) |
| x g | Kalk (x = 1 oder 2) |
| 6g | W/O-Emulgator (EZ-mul NTder Fa. NL Baroid) |
| 346 g | Baryt |
| 9,2 g | CaCl₂ x 2 H₂O |

In dieser Rezeptur entsprechen etwa 1,35 g Kalk dem Wert von 2 lb/bbl.

Nachdem in an sich bekannter Weise aus den jeweils eingesetzten Komponenten unter Variation der Esterölphase eine W/O-Invert-Bohrspülung zusammengestellt worden ist, werden zunächst am ungealterten und dann am gealterten Material die Viskositätskennwerte wie folgt bestimmt:

Messung der Viskosität bei 50 °C in einem Fann-35-Viskosimeter der Fa. NL Baroid. Es werden in an sich bekannter Weise bestimmt die Plastische Viskosität (PV), die Fließgrenze (YP) sowie die Gelstärke (lb/100 ft²) nach 10 sec. und 10 min.

Die Alterung erfolgt durch Behandlung im Autoklaven - im sogenannten Roller-oven - für den Zeitraum von 16 Stunden bei 125 °C.

### Beispiel 1

Als Esteröl wird das Reaktionsprodukt aus Isononansäure und Isoheptanol - ein Ester mit einem Flammpunkt von 145 °C und einem Stockpunkt unterhalb - 10 ° - eingesetzt. Die Kalkmenge der eingangs angegebenen Rahmenrezeptur beträgt in diesem Versuch 2 g.

Die am ungealterten und am gealterten Material bestimmten Kennzahlen sind in der nachfolgenden tabellarischen Zusammenfassung aufgeführt.

| | ungealtertes Material | gealtertes Material |
|---|---|---|
| Plastische Viskosität (PV) | 26 | 31 |
| Fließgrenze (YP) | 14 | 14 |
| Gelstärke (lb/100 ft²) | | |
| 10 sec. | 5 | 6 |
| 10 min. | 8 | 9 |

### Beispiel 2

Der Ansatz des Beispiels 1 wird wiederholt, die in der Rahmenrezeptur eingesetzte Kalkmenge beträgt jetzt jedoch 1 g. Die am ungealterten und gealterten Material bestimmten Kennzahlen sind wie folgt.

| | ungealtertes Material | gealtertes Material |
|---|---|---|
| Plastische Viskosität (PV) | 28 | 31 |
| Fließgrenze (YP) | 8 | 8 |
| Gelstärke (lb/100 ft²) | | |
| 10 sec. | 5 | 5 |
| 10 min. | 7 | 7 |

### Beispiel 3

Als Esteröl wird in den nachfolgenden Beispielen 3 und und 4 das Veresterungsprodukt von 2-Ethylhexanol und C₆₋₁₀-Vorlauffettsäuren (Handelsprodukt "Edenor" der Anmelderin) eingesetzt. Das Esteröl besitzt einen Flammpunkt von etwa 151 °C und einen Stockpunkt unterhalb - 10 °C.

In der nachfolgenden Tabelle sind die Viskositätswerte am ungealterten und gealterten Material zusammengefaßt, die bei Zugabe von 2 g Kalk zur Rahmenrezeptur bestimmt worden sind.

| | ungealtertes Material | gealtertes Material |
|---|---|---|
| Plastische Viskosität (PV) | 28 | 33 |
| Fließgrenze (YP) | 7 | 12 |
| Gelstärke (lb/100 ft²) | | |
| 10 sec. | 5 | 6 |
| 10 min. | 8 | 16 |

### Beispiel 4

Der Ansatz des Beispiels 3 wird wiederholt, jedoch wird jetzt der Esterölspülung Kalk nur in einer Menge von 1 g zugesetzt Die am ungealterten und gealterten Material bestimmten Viskositätswerte sind wie folgt.

| | ungealtertes Material | gealtertes Material |
|---|---|---|
| Plastische Viskosität (PV) | 24 | 23 |
| Fließgrenze (YP) | 12 | 12 |
| Gelstärke (lb/100 ft²) | | |
| 10 sec. | 5 | 5 |
| 10 min. | 7 | 6 |

### Beispiel 5

Das Esteröl aus Beispielen 1 und 2 - Ester aus Isononansäure/Isoheptanol - wird in einer weiteren Esterspülung mit einem Öl/Wasser-Verhältnis von 80/20 unter gleichzeitiger Zugabe von 2 g eines stark oleophilen Amins (Handelsprodukt "Araphen G2D" der Anmelderin - das Umsetzungsprodukt eines epoxidierten C_{12/14}alpha-Olefins und Diethanolamin) in der folgenden Rahmenrezeptur eingesetzt

| | |
|---|---|
| 210 ml | Esteröl |
| 48,2 g | Wasser |
| 6g | organophiler Bentonit (Omnigel) |
| 13 g | organophiler Lignit (Duratone der Fa. NL Baroid) |
| 2 g | Kalk |
| 8 g | W/O-Emulgator (EZ-mul NT der Fa. NL Baroid) |
| 270 g | Baryt |
| 20 g | CaCl₂ x 2 H₂O |

Die am ungealterten und gealterten Material bestimmten Viskositätswerte sind in der nachfolgenden Tabelle zusammengefaßt.

| | ungealtertes Material | gealtertes Material |
|---|---|---|
| Plastische Viskosität (PV) | 35 | 32 |
| Fließgrenze (YP) | 31 | 20 |
| Gelstärke (lb/100 ft²) | | |
| 10 sec. | 12 | 7 |
| 10 min. | 14 | 9 |

### Beispiele 6 bis 9

In der Rahmenrezeptur der Beispiele 1 und 2 - unter Einsatz von Kalk in der Menge von 1 g wie in Beispiel 2 - werden die folgenden vier Ester als Ölphase eingesetzt und rheologisch gemäß den Angaben der Beispiele 1 und 2 vor und nach der Alterung bestimmt:
Beispiel 6: Ester aus 2-Ethylhexanol und C₈-Säure, Flammpunkt 152 °C, Viskosität bei 20 °C 4 bis 5 mPas, bei 50 °C 2 bis 3 mPas, Stockpunkt unterhalb - 10 °C.
Beispiel 7: Ester aus 2-Ethylhexanol und C₁₀-Säure mit dem Flammpunkt von 166 °C, Viskosität bei 20 °C 4 bis 5 mPas, bei 50 °C 2 bis 3 mPas, Stockpunkt ca. - 10 °C.
Beispiel 8: Ester aus n-Octanol (Handelsprodukt "Lorol" der Anmelderin) und C₁₀-Carbonsäure (Handelsprodukt "Edenor" der Anmelderin) mit einem Flammpunkt von 171 °C, Viskosität bei 20 °C 6 mPas, bei 50 °C 3 mPas und einem Stockpunkt von + 3 °C.
Beispiel 9: Ester aus Isononansäure und n-Octanol (Handelsprodukt "Lorol" der Anmelderin). Die jeweils bestimmten rheologischen Daten vor und nach der Alterung sind die folgenden:

### Beispiel 6

| | ungealtertes Material | gealtertes Material |
|---|---|---|
| Plastische Viskosität (PV) | 21 | 22 |
| Fließgrenze (YP) | 15 | 11 |
| Gelstärke (lb/100 ft²) | | |
| 10 sec. | 6 | 8 |
| 10 min. | 8 | 5 |

### Beispiel 7

| | ungealtertes Material | gealtertes Material |
|---|---|---|
| Plastische Viskosität (PV) | 29 | 31 |
| Fließgrenze (YP) | 8 | 8 |
| Gelstärke (lb/100 ft²) | | |
| 10 sec. | 5 | 5 |
| 10 min. | 7 | 7 |

### Beispiel 8

| | ungealtertes Material | gealtertes Material |
|---|---|---|
| Plastische Viskosität (PV) | 26 | 28 |
| Fließgrenze (YP) | 17 | 14 |
| Gelstärke (lb/100 ft²) | | |
| 10 sec. | 6 | 4 |
| 10 min. | 8 | 7 |

### Beispeil 9

| | ungealtertes Material | gealtertes Material |
|---|---|---|
| Plastische Viskosität (PV) | 27 | 29 |
| Fließgrenze (YP) | 12 | 13 |
| Gelstärke (lb/100 ft²) | | |
| 10 sec. | 5 | 4 |
| 10 min. | 7 | 7 |

### Beispiele 10 und 11

Es werden 2 weitere Esteröle im Rahmen der Grundrezeptur des Beispiels 1 (2 g Kalk) zu Bohrspülungen der genannten Art aufgearbeitet. Ihre rheologischen Grunddaten werden vor Alterung und nach Alterung bei 16 Stunden im Roller-oven bei 125 °C ermittelt

### Beispiel 10

Esteröl aus C_{8/10}-Vorlauffettsäuren (Handelsprodukt "V85KR" der Anmelderin) und Isotridecylalkohol, Flammpunkt 183 °C, Stockpunkt unterhalb - 10 °C.

| | ungealtertes Material | gealtertes Material |
|---|---|---|
| Plastische Viskosität (PV) | 44 | 55 |
| Fließgrenze (YP) | 13 | 24 |
| Gelstärke (lb/100 ft²) | | |
| 10 sec. | 6 | 7 |
| 10 min. | 8 | 10 |

### Beispiel 11

Esteröl auf Basis der in Beispiel 10 genannten C_{8/10}-Vorlauffettsäuren und 2-Ethylhexanol mit dem Flammpunkt von 151 °C und einem Stockpunkt unterhalb - 10 °C.

| | ungealtertes Material | gealtertes Material |
|---|---|---|
| Plastische Viskosität (PV) | 24 | 35 |
| Fließgrenze (YP) | 10 | 15 |
| Gelstärke (lb/100 ft²) | | |
| 10 sec. | 5 | 5 |
| 10 min. | 7 | 14 |

### Beispiel 12

In einer weiteren Versuchsreihe wird einem Esteröl gemäß Beispiel 11 als Alterungsschutzmittel ein stark oleophiles Amin (Handelsprodukt "Araphen G2D" der Anmelderin) in einer Menge von 2 g zugesetzt. Die Alterung im Roller-oven bei 125 °C wird jetzt auf den Zeitraum von 72 Stunden ausgedehnt. Die am ungealterten und gealterten Material bestimmten rheologischen Daten sind die folgenden.

| | ungealtertes Material | gealtertes Material |
|---|---|---|
| Plastische Viskosität (PV) | 24 | 24 |
| Fließgrenze (YP) | 8 | 14 |
| Gelstärke (lb/100 ft²) | | |
| 10 sec. | 4 | 5 |
| 10 min. | 6 | 7 |

In gleicher Weise wird die Rezeptur des Beispiels 10 mit dem genannten Alterungsschutzmittel in der angegebenen Menge versetzt und die Ölspülung auf Basis dieses Gemisches für den Zeitraum von 72 Stunden im Roller-oven bei 125 °C gealtert. Die vor Alterung und nach Alterung ermittelten rheologischen Daten sind die folgenden.

| | ungealtertes Material | gealtertes Material |
|---|---|---|
| Plastische Viskosität (PV) | 43 | 66 |
| Fließgrenze (YP) | 14 | 24 |
| Gelstärke (lb/100 ft²) | | |
| 10 sec. | 7 | 9 |
| 10 min. | 9 | 13 |

## Patentansprüche

1. Verwendung von bei Raumtemperatur fließfähigen und Flammpunkte oberhalb 80°C aufweisenden Estern aus Monocarbonsäuren synthetischen und/oder natürlichen Ursprungs mit 6 bis 11 C-Atomen und 1- und/oder mehrfunktionellen Alkoholen als Ölphase oder Bestandteil der Ölphase von Invert-Bohrspülschlämmen, die für eine umweltschonende Erschließung von Erdöl- bzw. Erdgasvorkommen geeignet sind und in einer geschlossenen Ölphase eine disperse wässrige Phase zusammen mit Emulgatoren, Beschwerungsmitteln, fluid-loss-Additiven und gewünschtenfalls weiteren üblichen Zusatzstoffen enthalten, wobei als Ölphase Monocarbonsäureester der angegebenen Art oder deren Abmischungen mit ökologisch verträglichen Komponenten (nonpolluting oils) verwendet werden, die im Temperaturbereich von 0 bis 5°C eine Brookfield (RVT-)Viskosität nicht oberhalb 50 mPas aufweisen, und daß dabei die Verwendung von Methylestern der C₆₋₁₁-Monocarbonsäuren als Ölphase oder Bestandteil der Ölphase sowie die Verwendung solcher Ölphasen ausgeschlossen ist, die als ökologisch verträgliche Mischkomponenten Ester aus monofunktionellen Alkoholen mit 2 bis 12 C-Atomen und aliphatisch gesättigten Monocarbonsäuren mit 12 bis 16 C-Atomen als wenigstens hälftigen Anteil der Ölphase enthalten.

2. Ausführungsform nach Anspruch 1, dadurch gekennzeichnet, daß Ester oder Estergemische eingesetzt werden, die auch im Temperaturbereich von 0 bis 5 °C fließ- und pumpfähig sind.

3. Ausführungsform nach Ansprüchen 1 und 2, dadurch gekennzeichnet, daß als Ölphase Monocarbonsäureester der angegebenen Art oder deren Abmischungen mit ökologisch verträglichen Komponenten (nonpolluting oils) verwendet werden, die im Temperaturbereich von 0 bis 5 °C eine Brookfield(RVT)-Viskosität nicht oberhalb 40 mPas und höchstens von etwa 30 mPas aufweisen.

4. Ausführungsform nach Ansprüchen 1 bis 3, dadurch gekennzeichnet, daß die im Bohrschlamm eingesetzten Ester der Carbonsäuren mit 6 bis 11 C-Atomen Erstarrungswerte (Fließ- und Stockpunkt) unter 0 °C, vorzugsweise unterhalb - 5 °C und insbesondere unterhalb - 10 °C und dabei Flammpunkte von wenigstens 90 °C, vorzugsweise oberhalb 100 °C aufweisen.

5. Ausführungsform nach Ansprüchen 1 bis 4, dadurch gekennzeichnet, daß in den Esterölen solche Alkoholkomponenten zum Einsatz kommen, die auch nach einer partiellen Esterspaltung im praktischen Einsatz ökologisch und toxikologisch - hier insbesondere inhalations-toxikologisch - unbedenklich sind.

6. Ausführungsform nach Ansprüchen 1 bis 5, dadurch gekennzeichnet, daß Carbonsäureester mit wenigstens 7, vorzugsweise mit wenigstens 8 C-Atome enthaltenden monofunktionellen Alkoholen undloder Ester mehrwertiger, insbesondere 2 bis 6 C-Atome enthaltender Alkohole verwendet werden.

7. Ausführungsform nach Ansprüchen 1 bis 6, dadurch gekennzeichnet, daß mit Estern von monofunktionellen Alkoholen natürlichen und/oder synthetischen Ursprungs gearbeitet wird, deren Kettenlänge beim Vorliegen überwiegend aliphatisch gesättigter Alkohole im Bereich von C₈₋₁₅, im Falle ein- undloder mehrfach olefinisch ungesättigter Alkohole aber auch bei höheren C-Zahlen, beispielsweise bis C₂₄ liegen kann.

8. Ausführungsform nach Ansprüchen 1 bis 7, dadurch gekennzeichnet, daß als Ester mehrwertiger Alkohole solche des Glycols undloder eines Propandiols zum Einsatz kommen.

9. Ausführungsform nach Ansprüchen 1 bis 8, dadurch gekennzeichnet, daß als Mischungskomponenten aus der Klasse der nonpolluting oils Esteröle aus monofunktionellen Alkoholen mit 2 bis 12, vorzugsweise 6 bis 10 C-Atomen und olefinisch 1-und/oder mehrfach ungesättigten Monocarbonsäuren mit 16 bis 24 C-Atomen verwendet werden, die vorzugsweise ihrerseits bereits Erstarrungswerte (Fließ- und Stockpunkt) unterhalb - 10 °C, vorzugsweise unterhalb - 15 °C und dabei Flammpunkte oberhalb 100 °C aufweisen.

10. Ausführungsform nach Anspruch 9, dadurch gekennzeichnet, daß als Mischungskomponente olefinisch ungesättigte Carbonsäureester eingesetzt werden, die sich zu mehr als 70 Gew.-%, vorzugsweise zu mehr als 80 Gew.-% und insbesondere zu mehr als 90 Gew.-% von olefinisch ungesättigten Carbonsäuren des Bereichs von C₁₆₋₂₄ ableiten und dabei insbesondere im Temperaturbereich von 0 bis 5 °C eine Brookfield(RVT)-Viskosität von nicht mehr als 55 mPas, vorzugsweise von nicht mehr als 45 mPas besitzen.

11. Ausführungsform nach Ansprüchen 9 und 10, dadurch gekennzeichnet, daß sich die als Mischungskomponenten eingesetzten Ester ungesättigter Monocarbonsäuren zu nicht mehr als 35 Gew.-% von 2- und mehrfach olefinisch ungesättigten Säuren, die zu wenigstens etwa 60 Gew.-% 1fach olefinisch ungesättigt sind und/oder zu mehr als 45 Gew.-%, vorzugsweise zu mehr als 55 Gew.-% von 2- undloder mehrfach olefinisch ungesättigten Säuren ableiten.

12. Ausführungsform nach Ansprüchen 1 bis 8, dadurch gekennzeichnet, daß als Mischungskomponenten auf Esterbasis Ester von aliphatisch gesättigten Monocarbonsäuren mit 1 bis 5 C-Atomen und/oder Ester aliphatisch gesättigter Monocarbonsäuren mit 12 bis 16 C-Atomen eingesetzt werden, die bevorzugt ihrerseits im Bereich von 0 bis 5 °C pump- und fließfähig sind und auch nach einer partiellen Hydrolyse im Einsatz ökologisch und toxikologisch unbedenklich sind.

13. Ausführungsform nach Ansprüchen 1 bis 12, dadurch gekennzeichnet, daß die Carbonsäureester im Invert-Bohrschlamm zusammen mit Alkalireserven zum Einsatz kommen, wobei Kalk eine besonders bevorzugte Alkalireserve ist, gegebenenfalls aber neben oder anstelle von Kalk beschränkte Mengen an Metalloxiden von der Art des Zinkoxids oder verwandter Zinkverbindungen vorliegen.

14. Ausführungsform nach Ansprüchen 1 bis 13, dadurch gekennzeichnet, daß in der Bohrspülung auf die Mitverwendung wesentlicher Mengen an starken hydrophilen Basen wie Alkalihydroxid und/oder Diethanolamin verzichtet wird und ein gegebenenfalls vorliegender Kalkzusatz zweckmäßigerweise auf den Höchstbetrag von etwa 2 lb/bbl Ölspülung begrenzt ist.

15. Ausführungsform nach Ansprüchen 1 bis 14, dadurch gekennzeichnet, daß die Carbonsäurester in den Invert-Bohrschlämmen zusammen mit zur Salzbildung mit freien Carbonsäuren befähigten Aminverbindungen ausgeprägt oleophiler Natur und höchstens beschränkter Wasserlöslichkeit zum Einsatz kommen.

16. Ausführungsform nach Ansprüchen 1 bis 15, dadurch gekennzeichnet, daß die Ester in Bohrspülungen zum Einsatz kommen, die im Invert-Bohrspülschlamm zusammen mit der geschlossenen Ölphase auf Esterbasis die fein-disperse wäßrige Phase in Mengen von etwa 5 bis 45 Gew.-%, vorzugsweise in Mengen von etwa 5 bis 25 Gew.-% enthalten.

17. Invert-Bohrspülungen, die für eine umweltfreundliche Erschließung von Erdöl- bzw. Erdgasvorkommen geeignet sind und in einer geschlossenen Ölphase eine disperse wässrige Phase zusammen mit Emulgatoren, Beschwerungsmitteln, fluid-loss-Additiven und gewünschtenfalls weiteren üblichen Zusatzstoffen enthalten, dadurch gekennzeichnet, daß die Ölphase bei Raumtemperatur fließfähige und Flammpunkte oberhalb 80°C aufweisende Ester aus Monocarbonsäuren synthetischen und/oder natürlichen Ursprungs mit 6 bis 11 C-Atomen und 1- und/oder mehrfunktionellen Alkoholen, gewünschtenfalls in Abmischung mit anderen Komponenten aus der Klasse der ökologisch verträglichen Verbindungen (nonpolluting oils) mit der Maßgabe enthält, daß die Ölphase des Invertschlamms im Temperaturbereich von 0 bis 5°C eine Brookfield (RVT)-Viskosität unterhalb 50 mPaS aufweist und daß dabei die Verwendung von Methylestern der C₆₋₁₁-Monocarbonsäuren als Ölphase oder Bestandteil der Ölphase sowie die Verwendung solcher Ölphasen ausgeschlossen ist, die als ökologisch verträgliche Mischkomponenten Ester aus monofunktionellen Alkoholen mit 2 bis 12 C-Atomen und aliphatisch gesättigten Monocarbonsäuren mit 12 bis 16 C-Atomen als wenigstens hälftigen Anteil der Ölphase enthalten.

18. Invert-Bohrspülung nach Anspruch 17, dadurch gekennzeichnet, daß sie alkalisch konditioniert ist, wobei als Alkalireserve bevorzugt Kalk und/oder Metalloxide von der Art des Zinkoxids vorliegen.

19. Invert-Bohrspülung nach Ansprüchen 17 und 18, dadurch gekennzeichnet, daß in der Ölspülung keine wesentlichen Mengen stark hydrophiler Basen wie Alkalihydroxide oder stark hydrophile Amine wie Diethanolamin vorliegen und daß bei Kalkzusatz diese Alkalireserve Mengen von etwa 2 lb/bbl (Kalk/Ölspülung) nicht überschreitet.

20. Invert-Bohrspülung nach Ansprüchen 17 bis 19, dadurch gekennzeichnet, daß sie zur Salzbildung mit Carbonsäuren befähigte Aminverbindungen ausgeprägt oleophiler Natur und höchstens beschränkter Wasserlöslichkeit enthalten.

21. Invert-Bohrspülung nach Ansprüchen 17 bis 20, dadurch gekennzeichnet, daß sie eine Plastische Viskosität (PV) im Bereich von etwa 10 bis 60 mPas und eine Fließgrenze (Yield Point YP) im Bereich von etwa 5 bis 40 lb/100 ft² - jeweils bestimmt bei 50 °C - aufweist.

22. Invert-Bohrspülung nach Ansprüchen 17 bis 21, dadurch gekennzeichnet, daß die Ester der Monocarbonsäuren mit 6 bis 11 C-Atomen wenigstens etwa 25 Gew.-%, vorzugsweise wenigstens etwa ein Drittel und insbesondere den überwiegenden Anteil der geschlossenen Ölphase ausmachen.

23. Invert-Bohrspülung nach Ansprüchen 17 bis 22, dadurch gekennzeichnet, daß ihr disperser Wasseranteil etwa 5 bis 45 Gew.-%, bevorzugt etwa 10 bis 25 Gew.-% ausmacht und insbesondere Salze von der Art CaCl₂ und/oder KCI gelöst enthält.

24. Invert-Bohrspülung nach Ansprüchen 17 bis 23, dadurch gekennzeichnet, daß die Ölphase des Invertschlamms im Temperaturbereich von 0 bis 5 °C eine Brookfield(RVT)-Viskosität nicht über 40 mPas aufweist.

## Claims

1. Use of esters flowable at room temperature and having flash points of above 80°C prepared from monocarboxylic acids of synthetic and/or natural origin having 6 to 11 C atoms and mono- and/or polyhydric alcohols as the oil phase or constituent of the oil phase of invert drilling muds, which are suitable for the environmentally compatible development of petroleum or natural gas deposits and contain in a continuous oil phase a disperse aqueous phase together with emulsifiers, weighting agents, fluid-loss additives and, if desired, further conventional additives, wherein monocarboxylic acid esters of the stated type or blends thereof with environmentally compatible components (non-polluting oils) are used as the oil phase, which in the temperature range from 0 to 5°C have a Brookfield (RVT) viscosity no higher than 50 mPa·s and that [sic] the use of methyl esters of C₆₋₁₁ monocarboxylic acids as the oil phase or constituent of the oil phase is excluded, as is the use of such oil phases which contain, as the environmentally compatible mixture components, esters prepared from monohydric alcohols having 2 to 12 C atoms and aliphatically saturated monocarboxylic acids having 12 to 16 C atoms as at least half the oil phase.

2. Embodiment according to claim 1, characterised in that esters or ester mixtures are used which are also flowable and pumpable at temperatures of 0 to 5°C.

3. Embodiment according to claims 1 and 2, characterised in that the oil phase comprises monocarboxylic acid esters of the stated type or blends thereof with environmentally compatible components (non-polluting oils), which, in the temperature range from 0 to 5°C, have a Brookfield (RVT) viscosity of no more than 40 mPa·s and at most of approx. 30 mPa·s.

4. Embodiment according to claims 1 to 3, characterised in that the esters of the carboxylic acids having 6 to 11 C atoms used in the drilling mud have solidification values (pour point and setting point) of below 0°C, preferably of below -5°C and, in particular, of below -10°C and simultaneously have flash points of at least 90°C and preferably of above 100°C .

5. Embodiment according to claims 1 to 4, characterised in that the alcohol components used in the ester oils are those which, even after partial ester cleavage in practical use, are environmentally and toxicologically, especially respiratory toxicologically, safe.

6. Embodiment according to claims 1 to 5, characterised in that carboxylic acid esters with monohydric alcohols having at least 7 and preferably at least 8 C atoms and/or esters of polyhydric alcohols, in particular alcohols containing 2 to 6 C atoms, are used.

7. Embodiment according to claims 1 to 6, characterised in that esters of monohydric alcohols of natural and/or synthetic origin, which have a chain length in the range from C₈₋₁₅ in the predominant presence of aliphatically saturated alcohols or an even greater chain length, for example up to C₂₄, in the presence of mono- and/or polyolefinically unsaturated alcohols, are used.

8. Embodiment according to claims 1 to 7, characterised in that esters of glycol and/or a propanediol are used as the esters of polyhydric alcohols.

9. Embodiment according to claims 1 to 8, characterised in that ester oils of monohydric alcohols having 2 to 12, preferably 6 to 10, C atoms and mono- and/or polyolefinically unsaturated monocarboxylic acids having 16 to 24 C atoms, which preferably themselves have solidification values (pour point and setting point) of below -10°C, preferably of below -15°C and simultaneously have flash points of above 100°C are used as mixture components from the class of non-polluting oils.

10. Embodiment according to claim 9, characterised in that olefinically unsaturated carboxylic acid esters of which more than 70 wt.%, preferably more than 80 wt.% and, in particular, more than 90 wt.% are derived from olefinically unsaturated C₁₆₋₂₄ carboxylic acids and which have a Brookfield (RVT) viscosity of no more than 55 mPa·s and preferably of no more than 45 mPa·s, in particular in the temperature range of 0 to 5°C, are used as mixture components.

11. Embodiment according to claims 9 and 10, characterised in that no more than 35 wt.% of the esters of unsaturated monocarboxylic acids used as mixture components are derived from di- and polyolefinically unsaturated acids, of which at least about 60 wt.% are monoolefinically unsaturated, and/or of which more than 45 wt.% and preferably more than 55 wt.% are derived from di- and/or polyolefinically unsaturated acids.

12. Embodiment according to claims 1 to 8, characterised in that esters of aliphatically saturated monocarboxylic acids having 1 to 5 C atoms and/or esters of aliphatically saturated monocarboxylic acids having 12 to 16 C atoms, which are preferably pumpable and flowable at 0 to 5°C and which, even after partial hydrolysis in use, are environmentally and toxicologically safe, are used as ester-based mixture components.

13. Embodiment according to claims 1 to 12, characterised in that the carboxylic acid esters are used in the invert drilling mud together with alkali reserves, wherein lime is a particularly preferred alkali reserve, although limited quantities of metal oxides of the zinc oxide type or related zinc compounds may optionally be present in addition to or instead of lime.

14. Embodiment according to claims 1 to 13, characterised in that the drilling mud does not contain significant quantities of highly hydrophilic bases, such as alkali metal hydroxide and/or diethanolamine, and any addition of lime present is conveniently limited to at most about 2 lb/bbl of drilling fluid.

15. Embodiment according to claims 1 to 14, characterised in that the carboxylic acid esters are used in the invert drilling muds together with amine compounds having a marked oleophilic nature and at most limited solubility in water which are capable of forming salts with free carboxylic acids.

16. Embodiment according to claims 1 to 15, characterised in that the esters are used in drilling fluids which, in the invert drilling mud, contain the finely dispersed aqueous phase in quantities of from about 5 to 45 wt.% and preferably in quantities of from about 5 to 25 wt.% together with the continuous ester-based oil phase.

17. Invert drilling fluids which are suitable for the environmentally compatible development of petroleum or natural gas deposits and contain in a continuous oil phase a disperse aqueous phase together with emulsifiers, weighting agents, fluid-loss additives and, if desired, further conventional additives, characterised in that the oil phase contains esters flowable at room temperature and having flash points of above 80°C prepared from monocarboxylic acids of synthetic and/or natural origin having 6 to 11 C atoms and mono- and/or polyhydric alcohols, if desired blended with other components from the class of environmentally compatible compounds (non-polluting oils), with the proviso that, in the temperature range from 0 to 5°C, the oil phase of the invert mud has a Brookfield (RVT) viscosity of below 50 mPa·s and that the use of methyl esters of C₆₋₁₁ monocarboxylic acids as the oil phase or constituent of the oil phase is excluded, as is the use of such oil phases which contain, as the environmentally compatible mixture components, esters prepared from monohydric alcohols having 2 to 12 C atoms and aliphatically saturated monocarboxylic acids having 12 to 16 C atoms as at least half the oil phase.

18. Invert drilling fluid according to claim 17, characterised in that it is alkali-conditioned, wherein lime and/or metal oxides of the zinc oxide type are preferably present as the alkali reserve.

19. Invert drilling fluid according to claims 17 and 18, characterised in that the drilling fluid does not contain significant quantities of highly hydrophilic bases, such as alkali metal hydroxides, or highly hydrophilic amines, such as diethanolamine, and in that, where lime is added, the alkali reserve does not exceed quantities of about 2 lb/bbl (lime/drilling fluid).

20. Invert drilling fluid according to claims 17 to 19, characterised in that it contains amine compounds having a marked oleophilic nature and at most limited solubility in water which are capable of forming salts with carboxylic acids.

21. Invert drilling fluid according to claims 17 to 20, characterised in that it has a plastic viscosity (PV) in the range from about 10 to 60 mPa·s and a yield point (YP) in the range from about 5 to 40 lb/100 ft², in each case determined at 50°C.

22. Invert drilling fluid according to claims 17 to 21, characterised in that the esters of the monocarboxylic acids having 6 to 11 C atoms constitute at least about 25 wt.%, preferably at least about one third and, in particular, the predominant proportion of the continuous oil phase.

23. Invert drilling fluid according to claims 17 to 22, characterised in that the dispersed water content thereof constitutes about 5 to 45 wt.%, preferably about 10 to 25 wt.% and, in particular, contains dissolved salts of the CaCl₂ and/or KCl type.

24. Invert drilling fluid according to claims 17 to 23, characterised in that, in the temperature range from 0 to 5°C, the oil phase of the invert mud has a Brookfield (RVT) viscosity of no more than 40 mPa·s.

## Revendications

1. Utilisation d'esters aptes à l'écoulement à la température ambiante et présentant des points d'inflammation supérieurs à 80°C, à base d'acides monocarboxyliques d'origine naturelle et/ou synthétique ayant de 6 à 11 atomes de carbone et d'alcools mono et/ou polyfonctionnels, en tant que phase huileuse ou composant de la phase huileuse de boues de forage en émulsion inversée qui sont appropriées à une exploitation de gisements de pétrole ou de gaz naturel ménageant l'environnement et contiennent dans une phase huileuse continue une phase aqueuse dispersée, conjointement avec des émulsifiants, alourdissants, additifs de perte de liquide et si on le désire d'autres additifs usuels dans laquelle en tant que phase huileuse, on utilise des esters d'acide monocarboxylique du type indiqué ou leurs mélanges avec des composants écologiquement acceptables (huiles non polluantes) qui possèdent dans la zone de températures de 0 à 5°C, une viscosité Brookfield (RVT) qui n'est pas supérieure à 50 mPa.s et en ce que pour cela, l'utilisation des esters méthyliques des acides monocarboxyliques en C₆-C₁₁, en tant que phase huileuse ou constituant de la phase huileuse ainsi que l'utilisation de ces phases huileuses - est exclue, huiles qui comme composants mixtes écologiquement acceptable, renferment des esters à base d'alcools monofonctionnels ayant de 2 à 12 atomes de carbone et des acides monocarboxyliques aliphatiquement saturés ayant de 12 à 16 atomes de carbone en tant que fraction au moins pour moitié de la phase huileuse.

2. Mode de fabrication selon la revendication 1,
caractérisé en ce qu'
on utilise des esters ou mélanges d'esters qui sont aptes à l'écoulement et au pompage même dans la plage de températures de 0 à 5°C.

3. Mode de fabrication selon les revendications 1 et 2,
caractérisé en ce qu'
on utilise en tant que phase huileuse des esters d'acides monocarboxyliques du type indiqué ou des mélanges de ceux-ci avec des composants compatibles avec l'environnement (huiles non polluantes), qui présentent, dans la plage de températures allant de 0 à 5°C, une viscosité Brookfield (RVT) n'excédant pas 40 mPa.s, et au maximum environ de 30 mPa.s.

4. Mode de fabrication selon les revendications 1 à 3,
caractérisé en ce que
les esters des acides carboxyliques ayant de 6 à 11 atomes de carbone, utilisés dans la boue de forage, présentent des points de solidification (point de fusion et de solidification) inférieurs à 0°C, de préférence inférieurs à - 5°C et en particulier inférieurs à - 10°C et en outre des points d'inflammation d'au moins 90°C, de préférence de plus de 100°C.

5. Mode de fabrication selon les revendications 1 à 4,
caractérisé en ce que
dans les huiles d'esters, on utilise des composants alcool, qui sont sans inconvénient du point de vue écologique et toxicologique, en particulier toxicologique par inhalation, dans l'utilisation pratique, même après une dissociation partielle des esters.

6. Mode de fabrication selon les revendications 1 à 5,
caractérisé en ce qu'
on utilise des esters d'acides carboxyliques avec des alcools monofonctionnels contenant au moins 7, de préférence au moins 8 atomes de carbone et/ou des esters d'alcools plurivalents contenant en particulier de 2 à 6 atomes de carbone.

7. Mode de fabrication selon les revendications 1 à 6,
caractérisé en ce qu'
on opère avec des esters d'alcools monofonctionnels d'origine naturelle et/ou synthétique dont la longueur de chaîne peut se situer dans le cas de la présence d'alcools essentiellement aliphatiques saturés, dans la plage de C₈_₁₅, et dans le cas d'alcools à une ou plusieurs insaturations oléfiniques, également avec de plus grands nombres d'atomes de C, par exemple jusqu'en C₂₄.

8. Mode de fabrication selon les revendications 1 à 7,
caractérisé en ce qu'
on utilise comme ester d'alcools plurivalents ceux du glycol et/ou d'un propanediol.

9. Mode de fabrication selon les revendications 1 à 8,
caractérisé en ce qu'
en tant que composants de mélange appartenant à la catégorie des huiles non polluantes, on utilise les huiles d'esters à base d'alcools monofonctionnels ayant de 2 à 12, de préférence de 6 à 10 atomes de carbone et d'acides monocarboxyliques à une ou plusieurs insaturations oléfiniques, ayant de 16 à 24 atomes de carbone, qui de préférence présentent pour leur part déjà des indices de solidification (point de fusion et de solidification) inférieurs à - 10°C, de préférence inférieurs à - 15°C, et en outre des points d'inflammation de plus de 100°C.

10. Mode de fabrication selon la revendication 9,
caractérisé en ce qu'
on utilise, en tant que composants de mélange, des esters d'acides carboxyliques à insaturation oléfinique qui dérivent, à raison de plus de 70 % en poids, de préférence de plus de 80 % en poids et en particulier de plus de 90 % en poids, d'acides carboxyliques à insaturation oléfinique ayant de 16 à 24 atomes de carbone, et ont en outre, en particulier dans la plage de températures de 0 à 5°C, une viscosité Brookfield (RVT) n'excédant pas 55 mPa.s, de préférence n'excédant pas 45 mPa.s.

11. Mode de fabrication selon les revendications 9 et 10,
caractérisé en ce que
les esters d'acides monocarboxyliques insaturés, utilisés en tant que composants de mélange, dérivent, à raison de pas plus de 35 % en poids, d'acides à deux insaturations oléfiniques et plus, qui sont à une insaturation mono-oléfinique à raison d'au moins environ 60 % en poids et/ou, à raison de plus de 45 % en poids, de préférence de plus de 55 % en poids, d'acides à deux et/ou plus de deux insaturations oléfiniques.

12. Mode de fabrication selon les revendications 1 à 8,
caractérisé en ce qu'
en tant que composants de mélange à base d'esters, on utilise des esters d'acides monocarboxyliques aliphatiques saturés ayant de 1 à 5 atomes de carbone et/ou des esters d'acides monocarboxyliques aliphatiques saturés ayant de 12 à 16 atomes de carbone qui, de préférence, sont pour leur part aptes à l'écoulement et au pompage dans la plage de 0 à 5°C et sont sans inconvénient du point de vue écologique et toxicologique, même après une hydrolyse partielle lors de l'utilisation.

13. Mode de fabrication selon les revendications 1 à 12,
caractérisé en ce que
les esters d'acides carboxyliques sont utilisés dans la boue de forage en émulsion inversée, conjointement avec des réserves alcalines, la chaux étant une réserve alcaline particulièrement préférée, des quantités limitées d'oxydes métalliques du type de l'oxyde de zinc ou de dérivés de zinc apparentés étant toutefois éventuellement présentes en plus ou au lieu de la chaux.

14. Mode de fabrication selon les revendications 1 à 13,
caractérisé en ce que
dans la boue de forage, on se dispense de l'utilisation simultanée d'importantes quantités de bases fortement hydrophiles- telles qu'un hydroxyde de métal alcalin et/ou la diéthanolamine- et qu'une addition de chaux éventuellement présente est convenablement limitée à la quantité maximale environ de 2 livres/baril de fluide de forage.

15. Mode de fabrication selon les revendications 1 à 14,
caractérisé en ce qu'
on utilise les esters d'acides carboxyliques, dans les boues de forage en émulsion inversée, conjointement avec des composés aminés aptes à la salification avec des acides carboxyliques libres, de nature lipophile marquée et d'hydrosolubilité tout au plus limitée.

16. Mode de fabrication selon les revendications 1 à 15,
caractérisé en ce que
les esters sont utilisés dans des fluides de forage qui contiennent dans la boue de forage en émulsion inversée, conjointement avec la phase huileuse continue à base d'esters, la phase aqueuse finement dispersée en quantités d'environ 5 à 45 % en poids, de préférence en quantités d'environ 5 à 25 % en poids.

17. Fluides de forage en émulsion inversée, qui sont appropriés pour une mise en exploitation favorable à l'environnement de gisements de pétrole et de gaz naturel et qui renferment, dans un phase huileuse continue, une phase aqueuse dispersée, conjointement avec des émulsifiants, alourdissants, additifs de perte de liquide et si désiré, d'autres additifs usuels,
caractérisés en ce que
la phase huileuse contient des esters aptes à l'écoulement à la température ambiante et présentant des points d'inflammation au-dessus de 80°C, à base d'acides monocarboxyliques d'origine synthétique et/ou naturelle ayant de 6 à 11 atomes de carbone et/ou des alcools mono et polyfonctionnels, si désiré en mélange avec d'autres composants choisis dans la classe des composés écologiquement compatibles (huiles non polluantes) avec la réserve que la phase huileuse de la suspension inversée dans la zone de températures de 0 à 5°C, une viscosité Brookfield (RVT) en dessous de 50 mPa.s et que de cette façon l'utilisation d'esters méthyliques des acides monocarboxyliques en C₆-C₁₁ en tant que phase huileuse ou constituant la phase huileuse ainsi que l'utilisation de ces phases huileuses, est exclu- phases qui renferment en tant que composants mixtes écologiquement compatibles un ester à base d'alcools unifonctionnels ayant de 2 à 12 atomes de carbone et d'acide monocarboxylique aliphatiquement saturé ayant 12 à 16 atomes de carbone, en tant que fraction au moins pour moitié de la phase huileuse.

18. Fluide de forage en émulsion inversée selon la revendication 17,
caractérisé en ce qu'
il est soumis à un conditionnement alcalin, de préférence de la chaux et/ou des oxydes métalliques du type de l'oxyde de zinc étant présents en tant que réserve alcaline.

19. Fluide de forage en émulsion inversée selon les revendications 17 et 18,
caractérisé en ce qu'
aucune quantité importante de bases fortement hydrophiles, telles que des hydroxydes de métaux alcalins ou des amines fortement hydrophiles telles que la diéthanolamine, n'est présente dans le fluide de forage, et en ce que dans le cas d'addition de chaux, cette quantité de réserve alcaline n'excède pas environ 2 livres/baril (chaux/fluide de forage).

20. Fluide de forage en émulsion inversée selon les revendications 17 à 19,
caractérisé en ce qu'
il contient des composés aminés aptes à la salification avec des acides carboxyliques, de nature lipophile marquée et d'hydrosolubilité tout au plus limitée.

21. Fluide de forage en émulsion inversée selon les revendications 17 à 20,
caractérisé en ce qu'
il présente une viscosité plastique (VP) dans la plage environ de 10 à 60 mPa.s et un seuil de plasticité (Yield Point, YP) dans la plage environ de 5 à 40 lb/100 ft², dans chaque cas déterminé à 50°C.

22. Fluide de forage en émulsion inversée selon l'une quelconque des revendications 17 à 21,
caractérisé en ce que
les esters des acides monocarboxyliques ayant de 6 à 11 atomes de carbone constituent au moins environ 25 % en poids de préférence au moins environ 1/3 et en particulier la majeure partie de la phase huileuse continue.

23. Fluide de forage en émulsion inversée selon l'une quelconque des revendications 17 à 22,
caractérisé en ce que
sa fraction aqueuse dispersée constitue environ de 5 à 45 % en poids, de préférence environ de 10 à 25 % en poids et contient en particulier des sels du type CaCl2 et/ou KCl dissous.

24. Fluide de forage en émulsion inversée selon l'une quelconque des revendications 17 à 23,
caractérisé en ce que
la phase huileuse de la boue en émulsion inversée présente dans la plage de températures de 0 à 5°C, une viscosité Brookfield (RVT) n'excédant pas 40 mPa.s.
